# EUROPÄISCHE PATENTSCHRIFT

(11) **EP 2 444 280 B1**
(45) Veröffentlichungstag und Bekanntmachung des Hinweises auf die Patenterteilung: **02.04.2014**
(21) Anmeldenummer: 11185801.5
(22) Anmeldetag: 19.10.2011
(51) Int. Cl.: B60N 2/30, B60N 2/20, B60N 2/24, B60N 2/38, B64D 11/06

(54) **Klappbarer Fahrzeugsitz**
Collapsible vehicle seat
Siège de véhicule pliant

(30) Priorität: 19.10.2010 DE 102010048719
(43) Veröffentlichungstag der Anmeldung: 25.04.2012
(73) Patentinhaber: GRAMMER AG, 92224 Amberg (DE)
(72) Erfinder: Thomas, Haller, 92289 Ursensollen (DE); Meier, Johann, 92269 Fensterbach (DE); Kastner, Rudolf, 92245 Kümmersbruck (DE); Schneider, Franz, 92263 Ebermannsdorf (DE)
(74) Vertreter: Hannke, Christian

(56) Entgegenhaltungen:
- EP-A2- 2 060 436
- GB-A- 2 337 925
- US-A- 5 797 649

## Beschreibung

Die vorliegende Erfindung bezieht sich auf einen klappbaren Fahrzeugsitz, insbesondere für Nutzfahrzeuge, mit einer Rückenlehne und einem Sitzteil gemäß dem Oberbegriff des Anspruches 1.

Fahrzeugsitze, insbesondere Fahrzeugsitze mit klappbarer Rückenlehne und stationär angeordnetem Sitzteil sind beispielsweise aus dem Automobilsektor hinreichend bekannt, wobei hierbei beispielsweise die Rückenlehne in eine Liegeposition bewegt werden kann, um dem Passagier die Möglichkeit zu geben sich in einer zurückgelehnten Position zu entspannen oder auch in Richtung des Sitzteiles geklappt werden kann, wodurch beispielsweise in größeren Fahrzeugen, wie in SUVs ein Ablageelement, wie z.B. ein Tisch entsteht.

Weiterhin sind aus dem Stand der Technik auch Sitze bekannt, welche durch eine Drehkonsole um einen definierten Winkel gedreht werden können, um folglich den unterschiedlichen Ansprüchen der Passagiere an die Sitzrichtung gerecht zu werden.

Wird jedoch zusätzlicher Platz im Fahrzeug benötigt, um beispielsweise zusätzliches Gepäck oder Einkäufe verstauen zu können, so müssen die Sitze erst vollständig aus dem Fahrzeug ausgebaut und beispielsweise in der Wohnung oder dem Keller gelagert werden. Dieser Ausbau ist aufgrund der heute vorherrschenden hohen Sicherheitsanforderungen an einen Fahrzeugsitz auch mit einer gewissen Kraftanstrengung verbunden und verlangt zudem oftmals zudem ein ausgeprägtes technisches Verständnis zur Anordnung und dem Aufbau des Sitzes.

Demgegenüber sind die in einem Nutzfahrzeug, wie beispielsweise einem Traktor oder einem Stapler angeordneten Fahrersitze derart mit der Fahrzeugkarosserie bzw. der Fahrzeuginnenwandung verbunden, dass diese von einem Fahrzeugführer nicht aus- und wieder eingebaut werden können, ohne vorher wesentliche Elemente des Fahrzeuges bzw. des Fahrzeuginnenraumes demontieren zu müssen.

Aufgrund des begrenzten Innenraumes in einem Nutzfahrzeuges ist zudem meist nur ein Fahrersitz in dem Nutzfahrzeug angeordnet, da ein zweiter fest angeordneter Passagiersitz derart viel Platz im Innenraum einnehmen würde, dass der Fahrer entweder nicht mehr an für ihn wichtige Bereiche des Innenraumes gelangt, oder selbst nicht mehr unbehindert bis zum Fahrersitz laufen kann. Dadurch ist es dem Fahrer nicht möglich einen weiteren Passagier mit seinem Nutzfahrzeug zu befördern.

Da jedoch vorzugsweise im privaten landwirtschaftlichen Betrieb der Traktor auch als Transport und Verkehrsmittel verwendet wird, bedarf es der Lösung zumindest einen weiteren Passagier sitzend im Innenraum, unter Beachtung der vorliegenden gesetzlichen Bestimmungen, zu transportieren, ohne dass der Fahrer dauerhaft durch die Anordnung eines zweiten Sitzes negativ beeinträchtigt wird.

D1 zeigt einen Fahrzeugsitz mit den Merkmalen des Obergriffs des Anspruch 1.

Demnach ist es die Aufgabe der vorliegenden Erfindung einen klappbaren Passagiersitz zur Verfügung zu stellen, der es ermöglich platzsparend zusammengeklappt zu werden, wobei die Bedürfnisse des Passagiers an ein komfortables Sitzen und die gesetzlichen Anforderungen an ein sicheres Befördern eines Passagiers berücksichtigt werden.

Diese Aufgabe löst die vorliegende Erfindung mittels eines klappbaren Fahrzeugsitzes gemäß dem Anspruch 1.

Beansprucht wird demnach ein klappbarer Fahrzeugsitz, insbesondere für Nutzfahrzeuge, mit einer Rückenlehne und einem Sitzteil, wobei die Rückenlehne klappbar ausgebildet und zumindest mit einem ersten Kurvenelement verbunden ist und das Sitzteil klappbar ausgebildet und zumindest mit einem zweiten Kurvenelement verbunden ist, wobei beide Kurvenelemente in Sitzbreitenrichtung beabstandet voneinander und um eine sich in Sitzbreitenrichtung erstreckende gemeinsame Achse drehbar angeordnet sind, damit die Rückenlehne und das Sitzteil um mindestens 90° drehbar sind.

Folglich weist der Fahrzeugsitz nicht nur eine klappbare bzw. schwenkbare Rückenlehne auf, sondern ebenfalls ein klappbares bzw. schwenkbares Sitzteil, wobei der Fahrzeugsitz bzw. Sitz demnach in mindestens drei unterschiedlichen Verwendungspositionen arretierbar ist.

Nämlich in einer ersten platzsparenden Position, wobei die Rückenlehne und ebenso das Sitzteil im Wesentlichen orthogonal bzw. senkrecht bzw. vertikal zu einer Oberfläche des Fahrzeugbodens ausgerichtet sind, d.h., dass das Sitzteil in Richtung der Rückenlehne hochgeklappt ist. Des Weiteren ist der erfindungsgemäße Sitz in einer Sitzposition arretierbar, d.h., das die Rückenlehne im Wesentlichen orthogonal zu der Fahrzeugbodenoberfläche ausgerichtet ist, wobei die Sitzfläche im Wesentlichen parallel zu der Fahrzeugbodenoberfläche ausgerichtet ist, wodurch das Sitzteil und die Rückenlehne folglich in einen Winkel von mindestens 90° aufspannen, so dass ein Passagier bzw. eine Person auf dem erfindungsgemäßen Fahrzeugsitz sitzen kann. Die dritte Position, in welcher der erfindungsgemäße Sitz arretierbar ist, ist die Ablage- bzw. Tischposition, wobei die Rückenlehne und das Sitzteil im Wesentlichen parallel zu der Fahrzeugbodenoberfläche ausgerichtet sind, d.h., dass die Rückenlehne in Richtung des aufgeklappten Sitzteiles geklappt ist. Folglich bietet der erfindungsgemäße Sitz die Möglichkeit auf der Rückenlehnenrückseite diverse Gegenstände ablegen zu können.

Die Fahrzeugbodenoberfläche ist dabei eine sich im Wesentlichen parallel zur Fahrbahn erstreckende Ebene, wobei diese Ebene im Wesentlichen horizontal ausgerichtet ist, wenn sich das Fahrzeug auf einer ebenen Fahrbahn, ohne Neigungen bzw. Steigungen bzw. Gefälle befindet.

Der Klappmechanismus des Sitzteiles sowie der Rückenlehne des erfindungsgemäßen Sitzes wird durch mindestens zwei Kurvenelemente sowie daran angeordnete Blattfedern ermöglicht, wobei die Kurvenelemente jeweils eine Kurvenbahn bzw. einen Kurvenelementrand aufweisen, welche bzw. welcher im Wesentlichen ungleichförmig gebildet ist. D.h., dass der Kurvenelementrand nicht zentrisch um den Mittelpunkt bzw. die Drehachse des Kurvenelementes verläuft. Die Kurvenelemente sind demnach aus dem Stand der Technik bekannte Elemente und sollen folglich hier nicht weiter beschrieben werden.

Die Rückenlehne sowie das Sitzteil des erfindungsgemäßen Sitzes sind jeweils mit einem eigenen Kurvenelement verbunden, welche auf einer sich im Wesentlichen in Sitzbreitenrichtung erstreckenden gemeinsamen Achse gelagert sind bzw. sich um diese Achse drehen.

Die Kurvenelemente sind dabei zumindest abschnittsweise voneinander beabstandet angeordnet, so dass die Kurvenelemente die Möglichkeit aufweisen unabhängig voneinander um die Achse gedreht werden zu können.

Dabei weist das erste und das zweite Kurvenelement jeweils mindestens zwei Arretierungsbereiche auf. Diese Arretierungsbereiche sind vorzugsweise in einem Winkel von ca. 90°, weiterhin bevorzugt in einem Winkel von 90° bis 110° voneinander beabstandet auf der Kurvenbahn des Kurvenelementes zueinander angeordnet.

Die mindestens zwei Kurvenelemente können jeweils eine zueinander unterschiedliche Gestalt aufweisen, wobei jedoch die Kurvenbahnen bzw. die Kurvenelementränder zwischen den beiden Arretierungsbereichen im Wesentlichen identisch ausgeführt sind.

Vorzugsweise sind die Arretierungsbereiche als Ausnehmungen zum Eingreifen eines Abschnittes eines zumindest teilweise gekrümmt ausgebildeten Bereiches von jeweils mindestens einer Blattfeder ausgebildet.

D.h., dass in diese Arretierungsbereiche bzw. Ausnehmungen bzw. Dellen lediglich ein definierter Bereich von an den Kurvenelementen angeordneten Blattfedern eingereift, wobei dementsprechend mindestens zwei Blattfedern in dem erfindungsgemäßen Sitz angeordnet sind.

Die Blattfedern weisen einen an den Kurvenelementen angeordneten Bereich auf, welcher gegenüber der im Wesentlichen geradlinig ausgebildeten Blattfeder derart gekrümmt ist, dass eine Berührung des Kurvenelementes bzw. des Kurvenelementrandes mit der Blattfeder nur über diesen gekrümmten bzw. gebogenen bzw. deformierten Bereich der Blattfeder erfolgt.

Somit liegt an jedem Kurvenelement außenseitig jeweils die mindestens eine Blattfeder an, welche mit dem Kurvenelement wechselwirkt, indem zumindest der Abschnitt der Blattfeder in die Arretierungsbereiche eingreift.

D.h., dass bei einer Drehung des Kurvenelementes um die gemeinsame Achse die Blattfeder bzw. der in den Arretierungsbereich des Kurvenelementes eingreifende Abschnitt der Blattfeder aus dem einen Arretierungsbereich herausbewegt wird, über den Kurvenelementrand des Kurvenelementes bis zum dem anderen Arretierungsbereich geführt wird und dann in den zweiten Arretierungsbereich eingreift.

Folglich ist vorzugsweise zumindest der gekrümmt ausgebildete Bereich der Blattfedern im Wesentlichen dauerhaft mit den jeweiligen Kurvenelementen in Berührung.

In einem weiteren bevorzugten Ausführungsbeispiel sind die Kurvenelemente als Kurvenscheiben ausgebildet, welche zumindest abschnittsweise jeweils einen Kurvenscheibenrand aufweisen, an dem die Ausnehmungen angeordnet sind.

Entsprechend der oben aufgeführten Kurvenelemente, welche beispielsweise als Kurvenrollen bzw. Kurvenzylinder ausgeführt sein können, weist die Kurvenscheibe ebenfalls mindestens zwei Arretierungsbereiche bzw. Ausnehmungen bzw. Dellen auf, welche auf der Kurvenbahn, nämlich dem Kurvenscheibenrand vorzugsweise in einem Winkel von ca. 90°, weiterhin bevorzugt in einem Winkel von 90° bis 110° voneinander beabstandet sind.

Es ist jedoch auch denkbar, dass die Kurvenelemente bzw. die Kurvenscheiben jeweils mehr als zwei Arretierungsbereiche aufweisen, wobei der dritte oder der vierte Arretierungsbereich vorzugsweise nicht zwischen dem ersten und zweiten Arretierungsbereich angeordnet ist, sondern vor dem ersten und/oder nach dem zweiten Arretierungsbereich, um das Sitzteil, bzw. die Rückenlehne in unterschiedlichste Positionen zueinander arretieren zu können.

Folglich kann die Rückenlehne nicht nur nach vorn, sondern auch nach hinten geklappte werden, bzw. in verschiedene nach hinten geklappten Positionen arretiert werden. Oder das Sitzteil kann eine zur Fahrzeugbodenoberfläche geneigte Position einnehmen, so dass beispielsweise der in Fahrtrichtung vordere Bereich des Sitzteils in Richtung der Fahrzeugbodenoberfläche geneigt ist.

Weiterhin ist es möglich, dass die beiden Kurvenelemente eine zueinander unterschiedliche Anzahl von Arretierungsbereichen aufweisen, so dass beispielsweise das Kurvenelement, welches mit dem Sitzteil verbunden ist lediglich zwei Arretierungsbereiche aufweist, wobei das Kurvenelement, welches mit der Rückenlehne verbunden ist beispielsweise drei oder mehr Arretierungsbereiche aufweist.

Vorzugsweise erstrecken sich die Arretierungsbereiche in radialer Richtung von der Oberfläche des Kurvenscheibenrandes der Kurvenscheibe nach innen sowie über die gesamte Breite des Kurvenscheibenrandes und über einen definierten Bereich entlang des Kurvenscheibenrandes.

Demnach bilden die Arretierungsbereiche bzw. die Ausnehmungen eine Abweichung von der Kurvenbahn des Kurvenelementes, welche sich von der Kurvenbahn radial nach innen der Kurvenscheibe erstreckt und vorzugsweise im Wesentlichen die Form des gekrümmt ausgebildeten Abschnittes der Blattfeder aufweist, welcher in die Ausnehmungen der Kurvenscheibe bzw. des Kurvenelementes eingreift.

Vorzugsweise sind die mindestens zwei Arretierungsbereiche bzw. Ausnehmungen der mindestens zwei Kurvenscheiben derart angeordnet, dass die erste Ausnehmung der ersten Kurvenscheibe nicht in jeder Positionierung des Sitzteiles und der Rückenlehne der ersten Ausnehmung der zweiten Kurvenscheibe in Sitzbreitenrichtung gegenüberliegt.

Vielmehr liegt der erste Arretierungsbereich des ersten Kurvenelementes dem ersten Arretierungsbereich des zweiten Kurvenelementes in Sitzbreitenrichtung im Wesentlichen gegenüberliegt, wenn eine Sitzfläche des Sitzelementes sich im Wesentlichen parallel und eine Anlehnfläche der Rückenlehne sich im Wesentlichen orthogonal zu einer Fahrzeugbodenoberfläche erstrecken.

D.h., dass sich in hierbei der Sitz in einer Sitzposition befindet, in welcher eine Person auf dem Sitz sitzen kann, da zum einen die Rückenlehne nach hinten bzw. oben und das Sitzteil nach unten geklappt ist, wodurch beide Elemente, d.h. das Sitzteil und die Rückenlehne jeweils in einem aufgeklappten Zustand vorliegen.

Weiterhin liegt beispielsweise der zweite Arretierungsbereich des zweiten Kurvenelementes vorzugsweise dem ersten Arretierungsbereich des ersten Kurvenelementes in Sitzbreitenrichtung im Wesentlichen gegenüber, wenn eine Sitzfläche des Sitzelementes sowie eine Anlehnfläche der Rückenlehne sich jeweils im Wesentlichen orthogonal zu einer Fahrzeugbodenoberfläche erstrecken.

In dieser platzsparenden Position des erfindungsgemäßen Sitzes ist die Rückenlehne nach hinten bzw. oben geklappt und liegt folglich in einem aufgeklappten Zustand vor, wobei das Sitzteil in Richtung der Rückenlehne nach oben geklappt ist und demnach in einem zugeklappten Zustand vorliegt. In solch einer Position nutzt der Sitz nur einen geringen Bereich des dem erfindungsgemäßen Sitz zur Verfügung stehenden Fahrzeuginnenraumes.

Der zweite Arretierungsbereich des ersten Kurvenelementes liegt vorzugsweise dem ersten Arretierungsbereich des zweiten Kurvenelementes in Sitzbreitenrichtung im Wesentlichen gegenüber, wenn eine Sitzfläche des Sitzelementes sowie eine Anlehnfläche der Rückenlehne sich jeweils im Wesentlichen parallel zu einer Fahrzeugbodenoberfläche erstrecken.

In dieser Anordnung von Sitzteil zu Rückenlehne nimmt der Sitz eine Tisch- bzw. Ablagenposition ein, da die Rückenlehne in Richtung des sich im aufgeklappten Zustand befindlichen Sitzteiles geklappt wird, so dass die Rückenlehnenanlehnfläche der Rückenlehne der Sitzfläche des Sitzteils gegenüberliegt, wobei die Rückenlehnenrückseite der Rückenlehne einen Tisch bzw. eine Ablage bildet, welche sich im Wesentlichen horizontal bzw. parallel zu der Fahrzeugbodenoberfläche erstreckt.

Die Rückenlehenrückseite weist beispielsweise eine Ablagefläche mit einer schalenartige Ausformung und/oder Aussparungen in Form eines Bechers etc auf, welche vorzugsweise aus Kunststoff oder einem anderen schmutzresistenten Material gefertigt ist. Die Ablagefläche, welches an der Rückenlehenrückseite fixiert bzw. angeordnet ist, ermöglicht es folglich diverse Gegenstände verrutschsicher darauf abzulegen.

Weiterhin ist die Rückenlehne in einem bevorzugten Ausführungsbeispiel mit der an dem ersten Kurvenelement angeordneten Seite gegenüberliegenden Seite mit einem ersten Tragarm drehbar um die gemeinsame Achse angeordnet.

Demnach ist die Rückenlehne nicht nur über das Kurvenelement an der gemeinsamen Achse gelagert, sondern gleichzeitig über einen Tragarm, der ebenfalls drehbar um die gemeinsame Achse an dieser Achse gelagert ist. Demnach kann eine Kraftverteilung bzw. -ableitung einerseits über das Kurvenelement und andererseits über den Tragarm erfolgen.

Auch das Sitzteil ist vorzugsweise mit der an der zweiten Kurvenscheibe angeordneten Seite gegenüberliegenden Seite mit einem zweiten Tragarm drehbar um die gemeinsame Achse angeordnet.

Folglich ist auch das Sitzteil nicht nur über das Kurvenelement an der gemeinsamen Achse gelagert, sondern auch über einen Tragarm, welcher an der gemeinsamen Achse drehbar gelagert ist.

Eine Überlastung der beiden Kurvenelemente wird demnach vermieden und eine einfache Bewegung bzw. ein einfaches Klappen der Rückenlehen und des Sitzteiles ermöglicht.

Dabei sind die mindestens zwei Tragarme und die mindestens zwei Kurvenelemente derart voneinander beabstandet und drehbar an der gemeinsamen Achse angeordnet, dass sie einander nicht blockieren bzw. in ihrer Bewegung behindern, was vorzugsweise dadurch erreicht wird, dass beispielsweise der Tragarm und das Kurvenelement der Rückenlehne in Sitzbreitenrichtung innerhalb bzw. zwischen dem Tragarm und dem Kurvenelement des Sitzteiles angeordnet sind.

Es ist jedoch auch denkbar, dass z.B. der Tragarm und das Kurvenelement des Sitzteiles in Sitzbreitenrichtung innerhalb bzw. zwischen dem Tragarm und dem Kurvenelement der Rückenlehne angeordnet sind.

Die Blattfedern, welche mit dem gekrümmt ausgebildeten Abschnitt in die Arretierungsbereiche eingreifen, sind vorzugsweise jeweils mit einem Endbereich zumindest abschnittsweise verdrehsteif in jeweils einer zum Austausch der Blattfedern lösbaren Klemmvorrichtung angeordnet.

Demzufolge ist es möglich die Blattfedern schnell und einfach austauschen zu können, wenn beispielsweise eine Beschädigung der Blattfedern vorliegt.

Weiterhin ist es möglich, dass der Fahrzeugsitz einen Becherhalter bzw. Flaschenhalter aufweist, welcher nicht auf der Rückenlehnenrückseite der Rückenlehne angeordnet ist, sondern in einem in Sitzlängsrichtung hinteren Bereich des Sitzes, vorzugsweise zwischen einer Haltevorrichtung zum Anbringen des Sitzes in einem Bereich des Fahrzeuges und dem Sitzteil bzw. der Rückenlehne. Dieser Becherhalter kann folglich dann verwendet werden, wenn die Rückenlehne in Richtung des Sitzteiles zugeklappt ist, d.h., wenn die Rückenlehne bzw. die Anlehnfläche der Rückenlehne und das Sitzteil bzw. die Sitzfläche des Sitzteils sich im Wesentlichen parallel zu der Fahrzeugbodenoberfläche befinden und der Sitz demnach in einer Tischposition arretiert ist.

Zudem ist es möglich, dass der Sitz ein Gurtsystem mit einem Gurtstraffer bzw. einer Gurtaufrollvorrichtung, einem Gurtschloss, einem Gurtband sowie einer Steckzunge bzw. Gurtzunge aufweist. Dieses Gurtsystem ist direkt an dem Fahrzeugsitz angeordnet und kann gemeinsam mit dem gesamten Sitz montiert bzw. demontier werden, so dass keine zusätzliche Montage eines gesonderten Gurtsystems innerhalb des Fahrzeuges notwendig ist.

Folglich kann der erfindungsgemäße Sitz als Zweitsitz in ein Fahrzeug bzw. ein Nutzfahrzeug integriert bzw. montiert werden oder auch als Fahrzeugsitz dienen, welcher beispielsweise im Tausch zu dem bisherigen Fahrzeugsitz in dem Fahrzeug angeordnet wird.

Weitere Vorteile, Ziele und Eigenschaften der vorliegenden Erfindung werden anhand nachfolgender Beschreibung anliegender Zeichnung erläutert, in welcher beispielhaft eine Ausführungsform des erfindungsgemäßen Sitzes sowie Ansichten zu unterschiedlichen Positionierungen der Kurvenelemente einer Ausführungsform des erfindungsgemäßen Sitzes dargestellt wird.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen:
- Fig. 1: eine Prinzipskizze einer Ausführungsform des erfindungsgemäßen Fahrzeugsitzes, welcher in einer Sitzposition arretiert ist;
- Fig. 2: eine Prinzipskizze einer Ausführungsform des erfindungsgemäßen Fahrzeugsitzes, welcher in einer Tisch- bzw. Ablageposition arretiert ist;
- Fig. 3: eine Prinzipskizze einer Ausführungsform des erfindungsgemäßen Fahrzeugsitzes, welcher in einer Platzsparposition arretiert ist;
- Fig. 4: eine Teilansicht des Grundgestelles einer Ausführungsform des erfindungsgemäßen Fahrzeugsitzes, welcher in einer Sitzposition arretiert ist;
- Fig. 5: eine Teilansicht des Grundgestelles einer Ausführungsform des erfindungsgemäßen Fahrzeugsitzes, welcher sich in einer Übergangsposition beispielsweise von einer Sitzposition in eine Platzsparposition befindet;
- Fig. 6: eine Teilansicht des Grundgestelles einer Ausführungsform des erfindungsgemäßen Fahrzeugsitzes, welcher in einer Platzsparposition arretiert ist;
- Fig. 7: eine Teilansicht des Grundgestelles einer Ausführungsform des erfindungsgemäßen Fahrzeugsitzes, welcher sich in einer Übergangsposition beispielsweise von einer Sitzposition in eine Tischposition befindet; und
- Fig. 8: eine Teilansicht des Grundgestelles einer Ausführungsform des erfindungsgemäßen Fahrzeugsitzes, welcher in einer Tischposition arretiert ist.

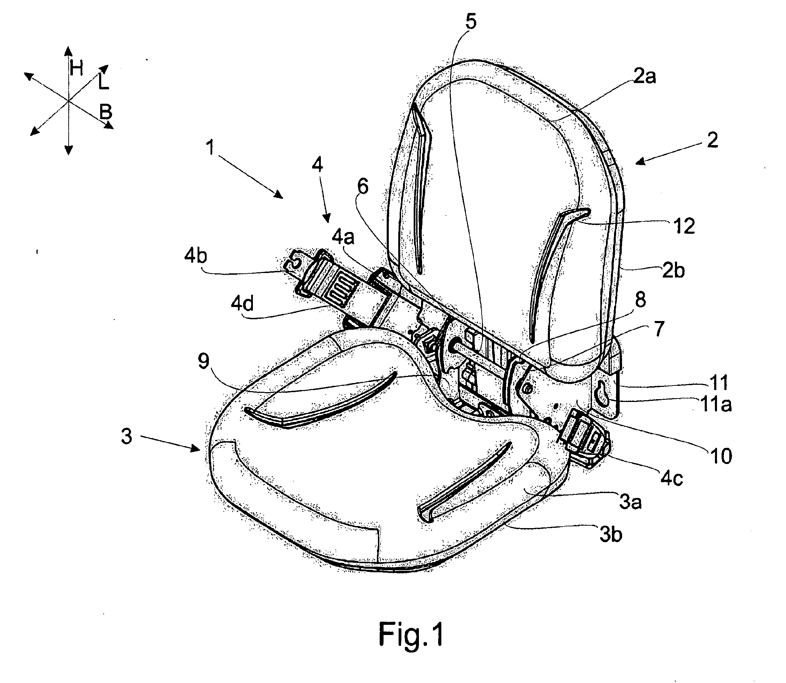

Fig. 1 zeigt eine Prinzipskizze einer Ausführungsform des erfindungsgemäßen Fahrzeugsitzes 1 in einer Sitzposition, d.h., dass die Rückenlehne 2 bzw. die Anlehnfläche 2a sich orthogonal zu der Fahrzeugbodenoberfläche (hier nicht gezeigt) bzw. in Sitzhöhenrichtung H erstreckt, wobei das Sitzteil 3 bzw. die Sitzfläche 3a des Sitzteiles 3 sich parallel zu der Fahrzeugbodenoberfläche bzw. in Sitzlängsrichtung L erstreckt.

Die Anlehnfläche 2a und die Sitzfläche 3a sind vorzugsweise jeweils zumindest teilweise gepolstert und liegen auf einem Rückenlehnenrahmen 2b bzw. einem Sitzteilrahmen 3b auf bzw. sind an diesen Rahmen verrutschfest angeordnet.

Der Rückenlehnenrahmen 2b ist mit einer ersten Kurvenscheibe 6 und einem ersten Tragarm 8 an einer gemeinsamen Achse 5, welche sich in Sitzbreitenrichtung B erstreckt drehbar angeordnet, wobei der Sitzteilrahmen 3b mit einer zweiten Kurvenscheibe 7 und einem zweiten Tragarm 9 ebenfalls an der gemeinsamen Achse 5 drehbar angeordnet sind.

Die gemeinsame Achse 5 wird mittels zweier seitlicher Befestigungselemente 10, welche im Wesentlichen in Sitzbreitenrichtung beidseitig der gemeinsamen Achse 5 angeordnet sind und sich zumindest abschnittsweise in Sitzlängsrichtung L erstrecken, verdrehsteif gelagert. Diese Befestigungselemente 10 sind an Halteelementen 11 angeordnet, welche sich im Wesentlichen in Sitzbreitenrichtung B nach außen erstrecken und in Sitzlängsrichtung L am hinteren Ende der Befestigungselemente 10 angeordnet sind.

Folglich ist es möglich, dass die Halteelemente 11 und die Befestigungselemente 10 aus einem einzigen Element bestehen, bei welchem durch Biegung eines definierten Bereiches die einzelnen Abschnitte des Halteelementes 11 und des Befestigungselementes 10 erzeugt werden.

Andererseits können beide Elemente 10, 11 auch einzelne bzw. eigenständige Elemente 10, 11 sein, welche in einem Fügebereich miteinander verbunden, beispielsweise verschweißt werden.

Die Halteelemente 11 weisen jeweils eine Durchgangsöffnung 11 a bzw. eine Bohrung 11a auf, durch welche Schrauben oder ähnliches geführt werden können, um die Halteelemente 11 und damit den gesamten Sitz 1 an einem Bereich im Innenraum des Fahrzeuges anbringen zu können.

Die erste Kurvenscheibe 6 und der erste Tragarm 8 sind auf der gemeinsamen Achse 5 zwischen dem zweiten Tragarm 9 und der zweiten Kurvenscheibe 7 angeordnet und werden demnach von dem zweiten Tragarm 9 und der zweiten Kurvenscheibe 7 eingeschlossen.

Es ist jedoch auch denkbar, dass die erste Kurvenscheibe 6 und der erste Tragarm 8 die zweite Kurvenscheibe 7 und den zweiten Tragarm 9 in Sitzbreitenrichtung B einschließen bzw. begrenzen.

Weiterhin ist gemäß Fig. 1 ein Gurtsystem 4 an dem Sitz 1 angeordnet, welches aus einem Gurtstraffer 4a bzw. einem Gurtaufroller 4a, einer Steckzunge 4b, einem Gurtschloss 4c und einem Gurtband 5d besteht.

Dabei ist das Gutschloss 4c in Sitzbreitenrichtung B an der einen Seite des Sitzes 1 und der Gurtaufroller 4a, die Steckzunge 4b sowie das an der Steckzunge befestigte Band 4d, welches durch den Gurtaufroller 4a aufgerollt und fest gespannt wird, in Sitzbreitenrichtung B an der anderen Seite des Sitzes 1 angeordnet.

Die vorzugsweise gepolsterte Sitzfläche 3a und Anlehnfläche 2a weisen zudem sich über die Sitzfläche 3a bzw. die Anlehnfläche 2a erstreckende Rillen 12 bzw. Vertiefungen 12 im Polster 2a, 3a auf, um beispielsweise eine Luftzirkulation zwischen dem auf dem Sitz sitzenden Passagier (hier nicht gezeigt) und dem Sitz 1 zu ermöglichen, so dass der Passagier auch bei sehr warmen Umgebungstemperaturen im Kontaktbereich 2a, 3a mit dem Sitz 1 nicht schwitzt.

Die Rillen erstrecken sich gemäß der Fig. 1 auf bzw. in der Anlehnfläche 2a im Wesentlichen in Sitzhöhenrichtung H von dem untern Bereich der Anlehnfläche 2 bis zu dem oberen Bereich der Anlehnfläche 2a und weisen dort einen nach außen gebogenen Bereich auf.

In bzw. auf der Sitzfläche 3a erstrecken sich die Rillen 12 in Sitzlängsrichtung L von einem hinteren Bereich der Sitzfläche 2a in Richtung eines vorderen Bereiches, um dort in einen nach außen gebogenen Bereich überzugehen.

In dieser dargestellten Ausführungsform weisen die Sitzfläche 3a und die Anlehnfläche 2a jeweils zwei Rillen 12 auf, wobei jedoch auch mehr als zwei Rillen 12 angeordnet sein können. Auch die Form der Rillen 12 und deren Anordnung zueinander sind nicht auf dieses Ausführungsbeispiel begrenzt.

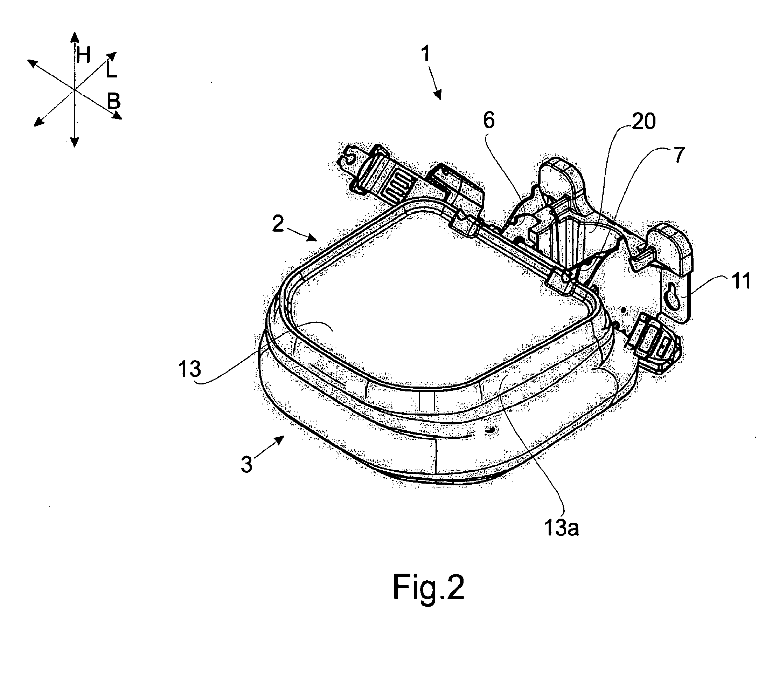

Die Fig. 2 zeigt eine Prinzipskizze einer Ausführungsform des erfindungsgemäßen Fahrzeugsitzes 1, welcher in einer Tisch- bzw. Ablageposition arretiert ist.

Folglich erstrecken sich die Rückenlehne 2 bzw. die Anlehnfläche 2a der Rückenlehne sowie das Sitzteil 3 bzw. die Sitzfläche 3a des Sitzteils 3 parallel zu der Fahrzeugbodenoberfläche (hier nicht gezeigt) bzw. in Sitzlängsrichtung L, wodurch ein Tischelement 13, welches auf der Rückseite des Rückenlehne 2, vorzugsweise am Rückenlehnenrahmen 2b angeordnet ist, im Wesentlichen parallel zur Fahrzeugbodenoberfläche ausgerichtet wird.

Dieses Tischelement 13 weist eine umlaufende Kante 13a bzw. Erhebung 13a auf, durch welche beispielsweise ein Herunterrutschen eines auf dem Tischelement 13 abgelegten Gegenstandes, z.B. während der Fahrt des Fahrzeuges vermieden werden kann.

Das Tischelement 13 bzw. die umlaufende Kante 13a sind vorzugsweise aus Kunststoff, wie beispielsweise Polyethylen, Polypropylen, Polyvinylchlorid, Materialgemischen oder anderen Materialen, welche vorzugsweise schmutzabweisend und lebensdauerbeständig sind, hergestellt.

Zudem zeigt Fig. 2 einen Becher- bzw. Flaschenhalter 20, welcher als eigenständiges und austauschbares Element zwischen dem Sitz 1 und den Halteelementen angeordnet ist, um einen Becher, welcher beispielsweise mit einem flüssigen Medium gefüllt ist oder eine Trinkflache in den Halter 20 hineinstellen zu können.

Der durch den Halter 20 gehaltene Becher ist folglich zwischen den seitlichen Befestigungselementen 10 sowie zwischen einer Fahrzeugwandung (hier nicht gezeigt), an welcher die Haltelemente 11 angeordnet werden, und dem Sitz 1 mit der Rückenlehne 2 und dem Sitzteil 3 angeordnet und somit derart vor Erschütterungen, beispielsweise in unwegsamen Gelände geschützt, dass ein Umkippen des Bechers bzw. der Flache während der Fahrt bzw. dem Betrieb des Fahrzeuges vermieden werden.

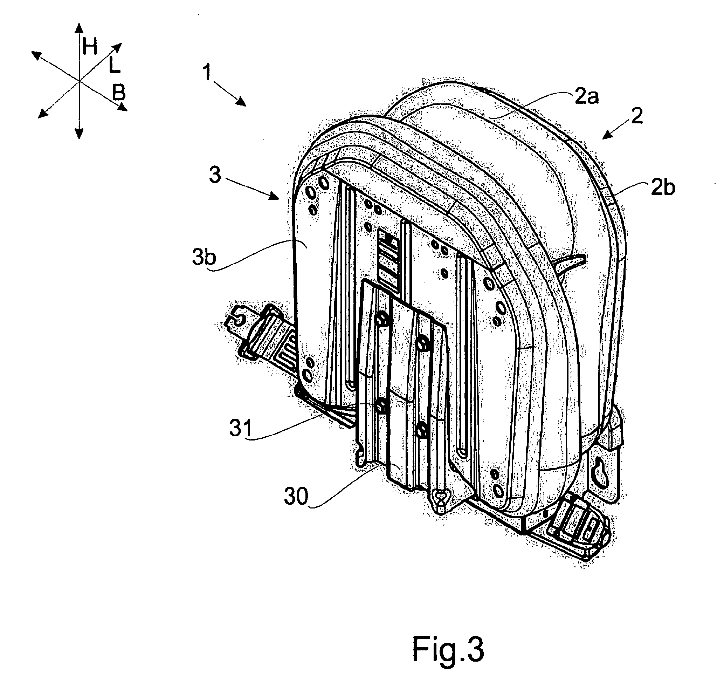

In der Fig. 3 ist eine Prinzipskizze einer Ausführungsform des erfindungsgemäßen Fahrzeugsitzes 1 dargestellt, welcher in einer Platzsparposition arretiert ist, wobei das Sitzteil 3 sowie die Rückenlehne 2 im Wesentlichen orthogonal bzw. senkrecht zu der Fahrzeugbodenoberfläche (hier nicht gezeigt) ausgerichtet sind, bzw. sich in Sitzhöhenrichtung H erstrecken.

Der Sitzteilrahmen 3b des Sitzteiles 3 ist auf einem Tragelement 30 bzw. einer Tragplatte 30 mittels Schrauben 31 fixiert, wobei das L-förmige Tragelement 30 sich in der Ansicht gemäß Fig. 3 mit einem Bereich in Sitzhöhenrichtung H nach oben und mit dem anderen Bereich in Sitzlängsrichtung L nach hinten erstreckt.

Der sich in Sitzlängsrichtung L nach hinten erstreckende Bereich des Tragelementes 30 weist folglich zwei sich erstreckende Tragarme (hier nicht gezeigt) auf, wobei der eine Tragarm in der zweiten Kurvenscheibe (hier nicht gezeigt) und der andere Tragarm in dem zweiten Tragarm (hier nicht gezeigt) des Sitzteiles 3 mündet.

Folglich ist das Sitzteil 3 über das Tragelement 30 mit der zweiten Kurvenscheibe und dem zweiten Tragarm, welche jeweils drehbar um die gemeinsame Achse (hier nicht gezeigt) gelagert sind, verbunden.

Es ist folglich auch denkbar, dass ein weiteres Tragelement (hier nicht gezeigt) an der Rückseite der Rückenlehne 2 zwischen dem Rückenlehnenrahmen 2b und dem Tischelement (hier nicht gezeigt) angeordnet ist, welches mit der ersten Kurvenscheibe (hier nicht gezeigt) und dem ersten Tragarm (hier nicht gezeigt), welche verdrehbar auf der gemeinsamen Achse gelagert sind, verbunden ist.

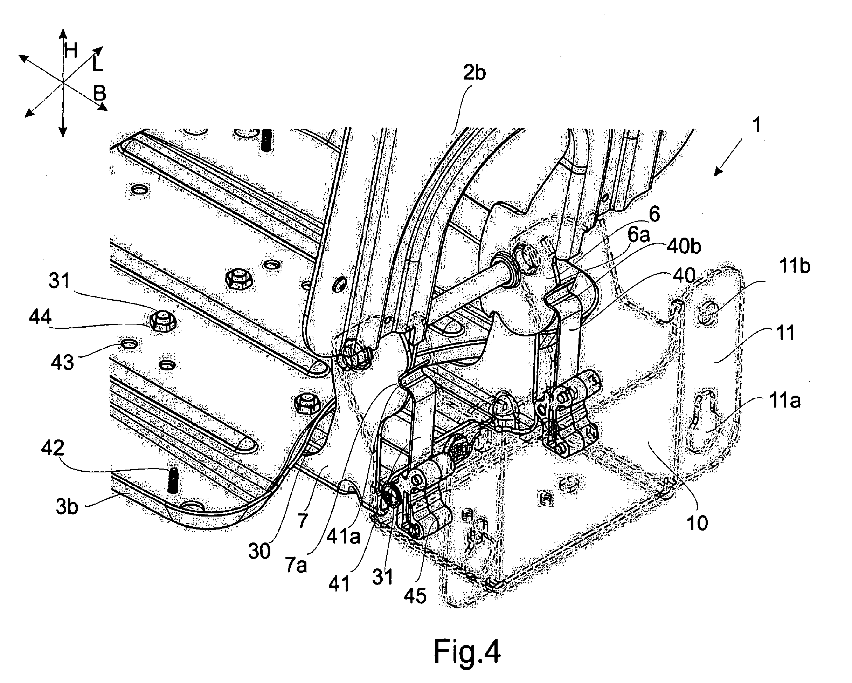

Fig. 4 zeigt eine Teilansicht des Grundgestelles einer Ausführungsform des erfindungsgemäßen Fahrzeugsitzes 1, welcher in einer Sitzposition gemäß der Fig. 1 arretiert ist, wobei der Rückenlehnenrahmen 2b orthogonal zu der Fahrzeugbodenoberfläche (hier nicht gezeigt) bzw. in Sitzhöhenrichtung H und der Sitzteilrahmen 3b parallel zur Fahrzeugbodenoberfläche bzw. in Sitzlängsrichtung L ausgerichtet ist.

Der Rückenlehnenrahmen 2b sowie der Sitzteilrahmen 3b weisen eine Mehrzahl von Bohrungen 43 auf, mittels derer beispielsweise das Tragelement 30 an dem Sitzteilrahmen 3b fixiert werden kann. Dafür werden Schrauben 31 in Sitzlängsrichtung L von unten durch Bohrungen des Tragelementes 30 und des Sitzteilrahmens 3b hindurch geführt, um in Sitzlängsrichtung L oberhalb des Sitzteilrahmens 3b beispielsweise mittels Muttern 44 befestigt zu werden.

Zudem sind in dem Sitzteilrahmen 3b eine Mehrzahl an Federn 42 angeordnet, welche beispielsweise zur Befestigung bzw. zum Einspannen des Sitzteilpolsters (hier nicht gezeigt) in den Sitzteilrahmen 3b dienen.

Folglich ist der Sitzteilrahmen 3b ein eigenständiges Element, welches über das Tragelement 30 mit der zweiten Kurvenscheibe 7 und dem zweiten Tragarm 9 verbunden ist.

Der Rückenlehnenrahmen 2b ist direkt mit der ersten Kurvenscheibe 6 und dem ersten Tragarm 8 verbunden, indem beide Elemente 6, 8 direkt an den Rückenlehnenrahmen 2b angeordnet bzw. mit diesem verbunden bzw. aus diesem gebildet sind. Die vorzugsweise unlösbare Verbindung zwischen dem Rückenlehnenrahmen 2b und den Elementen 6, 8, welche beispielsweise durch eine Schweißung gebildet wird, kann jedoch auch lösbar, z.B. mittels einer Schraubverbindung gestaltet sein.

Weiterhin sind gemäß Fig. 4 zwei Blattfedern 40, 41 angeordnet, welche mit einem in Sitzhöhenrichtung H unteren Bereich verdrehfest in einer Klemmvorrichtung 45 angeordnet sind und mit ihrem in Sitzhöhenrichtung H oberen Ende, welches einen im Wesentlichen S-förmig gekrümmten Bereich 40a, 41 a aufweist, in einen der Arretierungsbereiche 6a, 7a eingreifen, wobei jedoch lediglich der eine Abschnitt 40a, 41 a des gekrümmten Bereiches in die Ausnehmungen 6a, 7a eingreift.

Die Klemmvorrichtungen 45 sind jeweils mittels Schraubverbindungen 31 gespannt, um ein schnelles Austauschen der einzelnen Blattfedern 40, 41 zu ermöglichen.

Es ist jedoch auch denkbar, dass die Blattfedern 40, 41 sich in Sitzlängsrichtung L, also im Wesentlichen horizontal zu der Fahrzeugbodenoberfläche (her nicht gezeigt) in Richtung der Kurvenscheiben 6, 7 erstrecken, um dort mit einem Abschnitt des gekrümmten Bereiches 40a, 41 a in die Ausnehmungen 6a,7a der Kurvenscheiben 6, 7 einzugreifen. Demnach würden auch die Klemmvorrichtungen 45 zum Festhalten bzw. Einspannen der Blattfedern 40, 41 nicht wie in Fig. 4 gezeigt in Sitzhöhenrichtung H unterhalb des gekrümmten Bereiches 40a, 41 a, sondern in Sitzlängsrichtung L neben dem gekrümmten Bereich 40a, 41 a der Blattfedern 40, 41 liegen.

Mittels der gestrichelten Linien werden zudem die Haltelemente 11 sowie die seitlichen Befestigungselemente 10 dargestellt. Die Halteelemente 11 weisen zwei Bohrungen 11 a und 11b auf, wobei die erste Bohrung 11 a dazu verwendet wird den Sitz1 an einer Wandung im Innenraum des Fahrzeuges zu fixieren und die zweite Bohrung, um beispielsweise den Becherhalter (hier nicht gezeigt) an den Halteelementen 11 anzuordnen bzw. zu befestigen.

Gemäß der in Fig. 4 gezeigten Sitzposition des Sitzes 1 liegt der erste Arretierungsbereich 6a der ersten Kurvenscheibe 6 in Sitzbreitenrichtung B dem ersten Arretierungsbereich 7a der zweiten Kurvenscheibe 7 gegenüber.

Dementsprechend liegt der zweite Arretierungsbereich 6b der ersten Kurvenscheibe 6 in Sitzhöhenrichtung H unterhalb der gemeinsamen Achse 5 und der zweite Arretierungsbereich (hier nicht gezeigt) der zweiten Kurvenscheibe 7 in Sitzhöhenrichtung H oberhalb der gemeinsamen Achse 5.

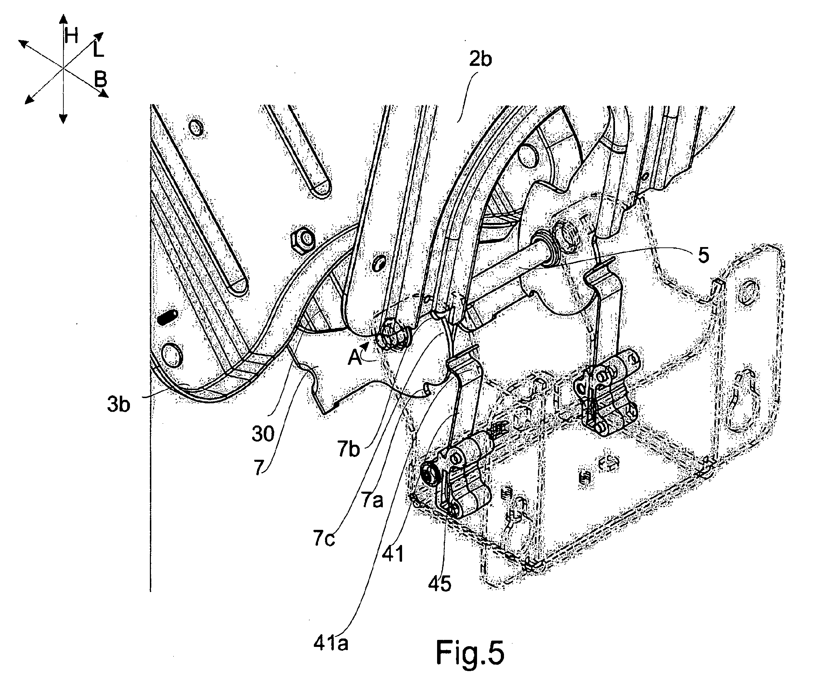

In der Fig. 5 ist eine Teilansicht des Grundgestelles einer Ausführungsform des erfindungsgemäßen Fahrzeugsitzes dargestellt, welcher sich in einer Übergangsposition beispielsweise von einer Sitzposition in eine Platzsparposition befindet.

Gegenüber der in Fig. 4 gezeigten Positionierung des Sitzes 1 wird nun lediglich der Sitzteilrahmen 3b in Richtung des Rückenlehnenrahmens 2b bewegt, wodurch die zweite Kurvenscheibe 7 eine im Uhrzeigersinn A gerichtete Drehbewegung um die gemeinsame Achse 5 ausführt und den Abschnitt 41 a der zweiten Blattfeder 41 damit zwingt sich aus dem ersten Arretierungsbereich 7a der zweiten Kurvenscheibe 7 hinaus zu bewegen. Dadurch wird die Blattfeder 41 mit einer Kraft bzw. Druckkraft beaufschlagt, welche die fest in der Klemmvorrichtung 45 eingespannten Blattfeder 41 aus einer ersten gespannten Position, in welcher sich die Blattfeder 41 im Wesentlichen in Sitzhöhenrichtung H erstreckt, in eine zweite ebenfalls gespannte Position überführt, wodurch die Blattfeder 41 bzw. vorzugsweise der in Sitzhöhenrichtung H obere Bereich der Blattfeder 41 in Sitzlängsrichtung L nach hinten gebogen wird, wodurch die Blattfeder 41 folglich in einem spitzen Winkel zur ersten Position ausgerichtet ist.

Der Sitzteilrahmen 3b sowie das an diesem angeordnete Tragelement 30 befinden sich nun in einer nicht arretierbaren Übergangsposition, beispielsweise in einem Winkel zwischen 0° und 90° in Bezug auf den Rückenlehenrahmen 2b.

Die Position des Rückenlehnenrahmens 2b sowie der ersten Kurvenscheibe 6 ist gegenüber der Position gemäß der Fig. 4 unverändert geblieben.

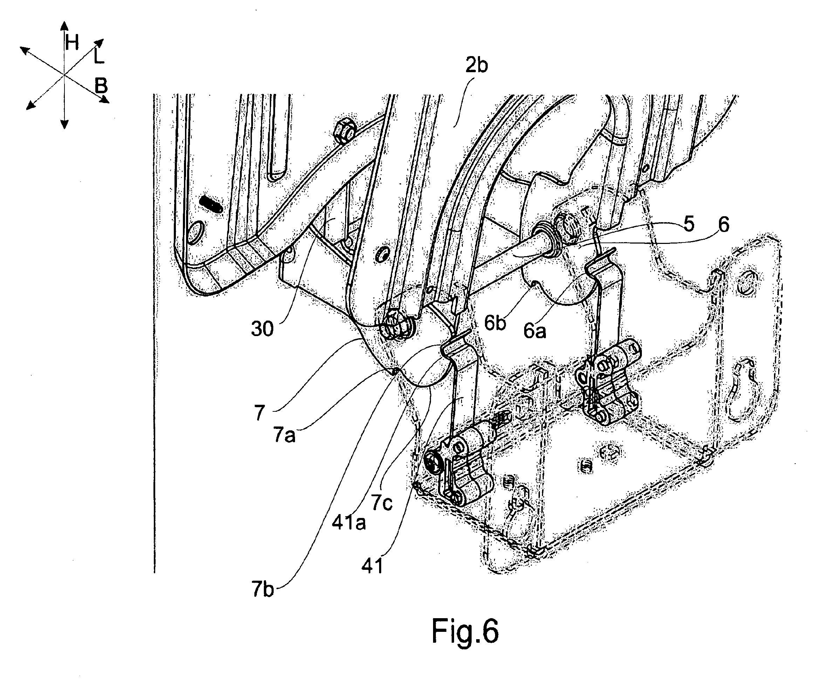

Die Fig. 6 zeigt eine Teilansicht des Grundgestelles einer Ausführungsform des erfindungsgemäßen Fahrzeugsitzes, welcher in einer Platzsparposition arretiert ist, wobei der Rückenlehnenrahmen 2b sowie der Sitzteilrahmen 3b sich entsprechend der in Fig. 3 gezeigten Positionierung des Sitzes 1 im Wesentlichen orthogonal zu der Fahrzeugbodenoberfläche (hier nicht gezeigt) bzw. in Sitzhöhenrichtung H erstrecken.

Die Position des Rückenlehnenrahmens 2b sowie der ersten Kurvenscheibe 6 ist gegenüber der Position gemäß der Fig. 4 bzw. der Fig. 5 unverändert geblieben.

Lediglich der Sitzteilrahmen 3b hat sich gegenüber der in Fig. 5 gezeigten Übergangsposition weiter in Richtung des Rückenlehnenrahmens 2b in eine zweite Arretierungsposition bewegt bzw. geklappt. Dadurch wurde auch die zweite Kurvenscheibe 7 weiter um die gemeinsame Achse 5 gedreht, wodurch der Abschnitt 41a der zweiten Blattfeder 41 weiter über die Kurvenbahn 7c bzw. den Kurvenscheibenrand 7c der zweiten Kurvenscheibe 7 bewegt wurde bzw. der Kurvenscheibenrand 7c an dem Abschnitt 41 a entlang geführt wurde. Die Kurvenscheibe 7 bzw. der Sitzteilrahmen 3b wurde folglich solange um die gemeinsame Achse 5 gedreht bis der Abschnitt 41 a an dem zweiten Arretierungsbereich 7b der zweiten Kurvenscheibe 7 eingreifen konnte.

Folglich hat die Blattfeder 41 wieder ihre erste gespannte Position eingenommen und erstreckt sich demnach wieder im Wesentlichen in Sitzhöhenrichtung H.

Demzufolge liegt der zweite Arretierungsbereich 7b der zweiten Kurvenscheibe 7 in Sitzbreitenrichtung B dem ersten Arretierungsbereich 6a der ersten Kurvenscheiben 6 gegenüber, wobei der erste Arretierungsbereich 7a der zweiten Kurvenscheibe 7 und der zweite Arretierungsbereich 6b der ersten Kurvenscheibe 6 jeweils in Sitzhöhenrichtung H sich unterhalb der gemeinsamen Achse 5 befinden.

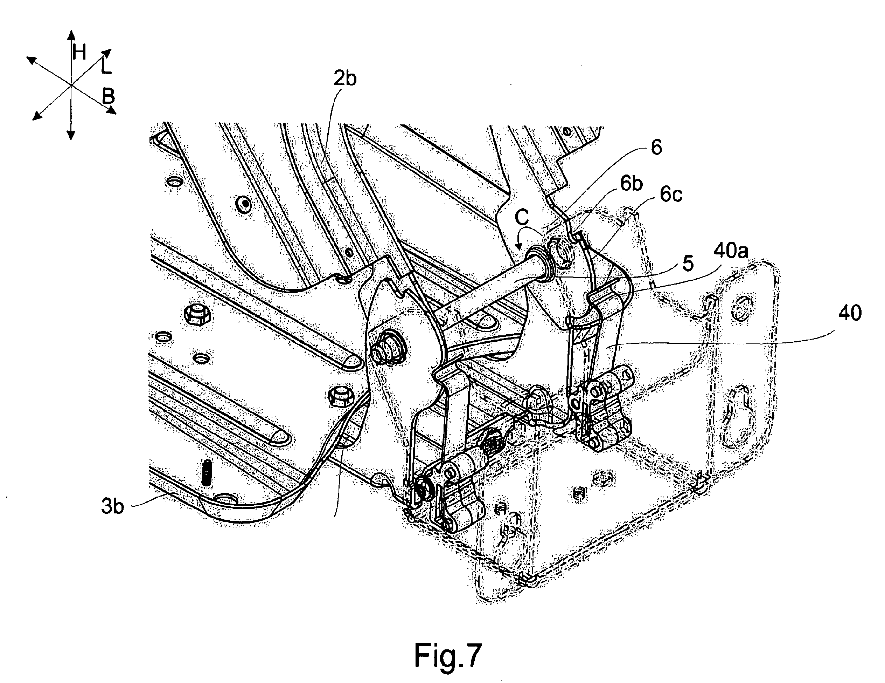

In Fig. 7 ist eine Teilansicht des Grundgestelles einer Ausführungsform des erfindungsgemäßen Fahrzeugsitzes dargestellt, welcher sich in einer Übergangsposition beispielsweise von einer Sitzposition in eine Tischposition befindet, wobei die Position des Sitzteilrahmens 3b gemäß der Fig. 4 unverändert geblieben ist und lediglich der Rückenlehnenrahmen 2b in Richtung des Sitzteilrahmens 3b bewegt bzw. geklappt wird.

Aufgrund der Bewegung der Rückenlehnenrahmens 2b in Richtung des Sitzteilrahmens 3b wird auch die erste Kurvenscheibe 6 entgegen des Uhrzeigersinns C um die gemeinsame Achse 5 gedreht.

Durch diese Drehbewegung der ersten Kurvenscheibe 6 wird die erste Blattfeder 40 bzw. der Abschnitt 40a des gekrümmten Bereiches der Blattfeder 40 aus dem ersten Arretierungsbereich 6a der ersten Kurvenscheibe 6 hinaus bewegt, wodurch die Blattfeder 40 mit einer Druckkraft beaufschlagt wird und folglich aus einer ersten gespannten Position in einen zweite gespannte Position gedrängt wird.

D.h., dass die Blattfeder 40 aus einer ersten im Wesentlichen in Sitzhöhenrichtung H ausgerichteten Position eine zweite ebenfalls gespannte Position überführt wird, wodurch die Blattfeder 40 bzw. vorzugsweise der in Sitzlängsrichtung L obere Bereich der Blattfeder 40 in Sitzlängsrichtung L nach hinten gebogen wird, wodurch die Blattfeder 40 in einem spitzen Winkel zur ersten Position ausgerichtet ist.

Aufgrund der Drehbewegung der ersten Kurvenscheibe 6 wird die Kurvenbahn 6c bzw. der Kurvenscheibenrand 6c an dem Abschnitt 40a der Blattfeder 40 vorbei bewegt, wobei jedoch der Abschnitt 40a vorzugsweise stets die erste Kurvenscheibe 6 bzw. den Kurvenscheibenrand 6c der ersten Kurvenscheibe 6 berührt.

Der Rückenlehnenrahmen 3b befindet sich nun in einer nicht arretierbaren Übergangsposition in einem Winkel zwischen 0° und 90° in Bezug auf den Sitzteilrahmen 3b.

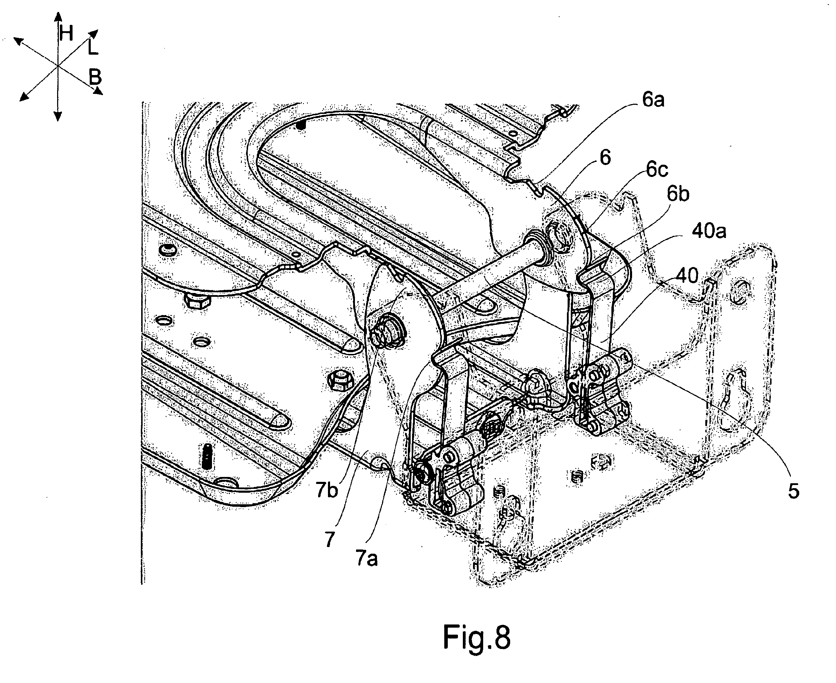

Die Fig. 8 zeigt eine Teilansicht des Grundgestelles einer Ausführungsform des erfindungsgemäßen Fahrzeugsitzes, welcher in einer Tischposition gemäß der Fig. 2 arretiert ist, wobei sich lediglich der Rückenlehnenrahmen 2b aus der in Fig. 7 gezeigten Übergangsposition weiter in Richtung des Sitzteilrahmens 3b bewegt bzw. geklappt hat, wodurch nun der Sitzteilrahmen 3b sowie der Rückenlehnenrahmen 2b sich jeweils im Wesentlichen in Sitzlängsrichtung L erstrecken.

Aufgrund der fortgeführten Bewegung des Rückenlehnenrahmens 2b wurde auch die erste Kurvenscheibe 6 weiter gegen den Uhrzeigersinn C gedreht, bis der Abschnitt 40a der ersten Blattfeder 40 in den zweiten Arretierungsbereich 6b der ersten Kurvenscheibe 6 eingreifen konnte.

Die Blattfeder 40 konnte somit aus ihrer zweiten gespannten Position in ihre erste gespannte Position übergehen und arretiert folglich den Rückenlehnenrahmen 2b in einer Tischposition.

Demzufolge liegt der zweite Arretierungsbereich 6b der ersten Kurvenscheibe 6 in Sitzbreitenrichtung B dem ersten Arretierungsbereich 7a der zweiten Kurvenscheibe 7 gegenüber, wobei der erste Arretierungsbereich 6a der ersten Kurvenscheibe 6 sowie der zweite Arretierungsbereich 7b der zweiten Kurvenscheibe 7 jeweils in Sitzhöhenrichtung H oberhalb der gemeinsamen Achse liegen.

Eine Verstellung des Sitzteils 3 sowie der Rückenlehne 2 sind beispielsweise durch den Einsatz der menschlichen Muskelkraft, also manuell möglich, wobei jedoch auch ein elektrisch gesteuertes System zur Einstellung des Sitzteiles 3 bzw. der Rückenlehne 2 an dem Sitz 1 angeordnet werden kann.

### Bezugszeichenliste

- 1: Fahrzeugsitz
- 2: Rückenlehne
- 2a: Anlehnfläche
- 2b: Rückenlehnenrahmen
- 3: Sitzteil
- 3a: Sitzfläche
- 3b: Sitzteilrahmen
- 4: Gurtsystem
- 4a: Gurtstraffer bzw. Gurtaufroller
- 4b: Steckzunge
- 4c: Gurtschloss
- 4d: Gurtband
- 5: gemeinsame Achse
- 6: erste Kurvenscheibe
- 6a: erster Arretierbereich
- 6b: zweiter Arretierbereich
- 6c: Kurvenscheibenrand
- 7: zweite Kurvenscheibe
- 7a: erster Arretierbereich
- 7b: zweiter Arretierbereich
- 7c: Kurvenscheibenrand
- 8: erster Tragarm
- 9: zweiter Tragarm
- 10: seitliches Befestigungselement
- 11: Halteelement
- 11a: Durchgangsöffnung/Bohrung
- 11b: Bohrung
- 12: Rillen
- 13: Tischelement
- 20: Becherhalter
- 30: Tragelement
- 31: Schrauben
- 40: erste Blattfeder
- 40a: Abschnitt des gekrümmten Bereiches
- 41: zweite Blattfeder
- 41a: Abschnitt des gekrümmten Bereiches
- 42: Feder
- 43: Bohrungen
- 44: Mutter
- 45: Klemmvorrichtung
- A: Uhrzeigersinn
- B: Sitzbreitenrichtung
- C: entgegen dem Uhrzeigersinn
- H: Sitzhöhenrichtung
- L: Sitzlängsrichtung

## Patentansprüche

1. Klappbarer Fahrzeugsitz, insbesondere für Nutzfahrzeuge, mit einer Rückenlehne (2) und einem Sitzteil (3),
wobei
die Rückenlehne (2) klappbar ausgebildet und zumindest mit einem ersten Kurvenelement verbunden ist und das Sitzteil (3) klappbar ausgebildet und zumindest mit einem zweiten Kurvenelement verbunden ist, wobei beide Kurvenelemente (6, 7) in Sitzbreitenrichtung (B) beabstandet voneinander und um eine sich in Sitzbreitenrichtung (B) erstreckende gemeinsame Achse (5) drehbar angeordnet sind, damit die Rückenlehne (2) und das Sitzteil (3) um mindestens 90° drehbar sind, wobei
das erste und das zweite Kurvenelement jeweils mindestens zwei Arretierungsbereiche aufweisen,
**dadurch gekennzeichnet, dass**
an jedem Kurvenelement außenseitig jeweils die mindestens eine Blattfeder (40, 41) anliegt, welche mit dem Kurvenelement wechselwirkt, indem zumindest der Abschnitt (40a, 41a) der Blattfeder in die Arretierungsbereiche eingreift.

2. Fahrzeugsitz gemäß Anspruch 1,
**dadurch gekennzeichnet, dass**
die Arretierungsbereiche als Ausnehmungen zum Eingreifen eines Abschnittes (40a, 41 a) eines zumindest teilweise gekrümmt ausgebildeten Bereiches von jeweils mindestens einer Blattfeder (40, 41) ausgebildet sind.

3. Fahrzeugsitz gemäß einem der Ansprüche 1 oder 2,
**dadurch gekennzeichnet, dass**
die Kurvenelemente als Kurvenscheiben (6, 7) ausgebildet sind, welche zumindest abschnittsweise jeweils einen Kurvenscheibenrand (6c, 7c) aufweisen, an dem die Ausnehmungen (6a, 6b, 7a, 7b) angeordnet sind.

4. Fahrzeugsitz gemäß Anspruch 3,
**dadurch gekennzeichnet, dass**
die Arretierungsbereiche (6a, 6b, 7a, 7b) sich in radialer Richtung von der Oberfläche des Kurvenscheibenrandes (6c, 7c) der Kurvenscheibe (6, 7) nach innen sowie über die gesamte Breite des Kurvenscheibenrandes (6c, 7c) und über einen definierten Bereich entlang des Kurvenscheibenrandes (6c, 7c) erstrecken.

5. Fahrzeugsitz gemäß einem der Ansprüche 2 bis 4,
**dadurch gekennzeichnet, dass**
der erste Arretierungsbereich des ersten Kurvenelementes dem ersten Arretierungsbereich des zweiten Kurvenelementes in Sitzbreitenrichtung (B) im Wesentlichen gegenüberliegt, wenn eine Sitzfläche (3a) des Sitzelementes (3) sich im Wesentlichen parallel und eine Anlehnfläche (2a) der Rückenlehne (3) sich im Wesentlichen orthogonal zu einer Fahrzeugbodenoberfläche erstrecken.

6. Fahrzeugsitz gemäß einem der Ansprüche 2 bis 4,
**dadurch gekennzeichnet, dass**
der zweite Arretierungsbereich des zweiten Kurvenelementes dem ersten Arretierungsbereich des ersten Kurvenelementes in Sitzbreitenrichtung im Wesentlichen gegenüberliegt, wenn eine Sitzfläche (3a) des Sitzelementes (3) sowie eine Anlehnfläche (2a) der Rückenlehne (2) sich jeweils im Wesentlichen orthogonal zu einer Fahrzeugbodenoberfläche erstrecken.

7. Fahrzeugsitz gemäß einem der Ansprüche 2 bis 4,
**dadurch gekennzeichnet, dass**
der zweite Arretierungsbereich des ersten Kurvenelementes dem ersten Arretierungsbereich des zweiten Kurvenelementes in Sitzbreitenrichtung im Wesentlichen gegenüberliegt, wenn eine Sitzfläche (3a) des Sitzelementes (3) sowie eine Anlehnfläche (2a) der Rückenlehne (2) sich jeweils im Wesentlichen parallel zu einer Fahrzeugbodenoberfläche erstrecken.

8. Fahrzeugsitz gemäß einem der vorangegangenen Ansprüche,
**dadurch gekennzeichnet, dass**
die Rückenlehne (2) mit der an dem ersten Kurvenelement (6) angeordneten Seite gegenüberliegenden Seite mit einem ersten Tragarm (8) drehbar um die gemeinsame Achse (5) angeordnet ist.

9. Fahrzeugsitz gemäß einem der vorangegangenen Ansprüche,
**dadurch gekennzeichnet, dass**
das Sitzteil (3) mit der an der zweiten Kurvenscheibe (7) angeordneten Seite gegenüberliegenden Seite mit einem zweiten Tragarm (9) drehbar um die gemeinsame Achse (5) angeordnet ist.

10. Fahrzeugsitz gemäß Anspruch 1,
**dadurch gekennzeichnet, dass**
die Blattfedern (40, 41) jeweils mit einem Endbereich zumindest abschnittsweise verdrehsteif in jeweils einer zum Austausch der Blattfedern (40, 41) lösbaren Klemmvorrichtung (45) angeordnet sind.

## Claims

1. A tilting vehicle seat, in particular for utility vehicles, comprising a backrest (2) and a seat part (3), wherein the backrest (2) is made tiltable and is connected at least to a first curved element and the seat part (3) is made tiltable and is connected at least to a second curved element, wherein both curved elements (6, 7) are arranged at a distance from each other in the width-wise direction (B) of the seat and are arranged so as to be rotatable about a common axis (5) extending in the width-wise direction (B) of the seat, so that the backrest (2) and the seat part (3) are rotatable by at least 90°, wherein the first and the second curved element each have at least two locking regions,
**characterised in that**
at least one leaf spring (40, 41) rests in each case against each curved element on the outside, wherein the leaf spring interacts with the curved element by means of engaging at least a portion (40a, 41 a) of the leaf spring in the locking regions.

2. Vehicle seat according to claim 1,
**characterised in that**
the locking regions are designed in the form of recesses for the engagement of a portion (40a, 41 a) in each case, which is at least in part made curved, of at least one leaf spring (40, 41).

3. Vehicle seat according to one of claims 1 or 2,
**characterised in that**
the curved elements are designed as curved discs (6, 7) which each provide at least partially one curved disc edge (6c, 7c) on which the recesses (6a, 6b, 7a, 7b) are arranged.

4. Vehicle seat according to claim 3,
**characterised in that**
the locking regions (6a, 6b, 7a, 7b) extend in the radial direction from the surface of the curved disc edge (6c, 7c) of the curved disc (6, 7) towards the inside as well as over the entire width of the curved disc edge (6c, 7c) and over a defined region along the curved disc edge (6c, 7c).

5. Vehicle seat according to any one of claims 2 to 4,
**characterised in that**
the first locking area of the first curved element is situated substantially opposite the first locking region of the second curved element in the width-wise direction (B) of the seat when a seat surface (3a) of the seat element (3) extends substantially parallel and a resting face (2a) of the backrest (2) extends substantially orthogonal to a surface of the vehicle bottom.

6. Vehicle seat according to any one of claims 2 to 4,
**characterised in that**
the second locking region of the second curved element is situated substantially opposite the first locking region of the first curved element in the width-wise direction (B) of the seat when a seat surface (3a) of the seat element (3) as well as a resting face (2a) of the backrest (2) each extend substantially at a right angle to a surface of the vehicle bottom.

7. Vehicle seat according to any one of claims 2 to 4,
**characterised in that**
the second locking region of the first curved element is substantially opposite the first locking region of the second curved element in the width-wise direction (B) of the seat when a seat surface (3a) of the seat element (3) as well as a resting face (2a) of the backrest (2) each extend substantially parallel to a surface of the vehicle bottom.

8. Vehicle seat according to any one of the preceding claims,
**characterised in that**
the backrest (2) is arranged with the side opposite the side arranged on the first curved element (6) with a first support arm (8) rotatable about the common axis (5).

9. Vehicle seat according to any one of the preceding claims,
**characterised in that**
the seat part (3) is arranged with the side opposite the side arranged on the second curved disc (7) with a second support arm (9) rotatable about the common axis (5).

10. Vehicle seat according to claim 1,
**characterised in that**
the leaf springs (40, 41) are each arranged with an end region rotationally rigid at least in sections in one respective clamping apparatus (45) which is releasable in order to replace the leaf springs (40, 41).

## Revendications

1. Siège de véhicule rabattable, en particulier pour des véhicules utilitaires, muni d'un dossier (2) et d'une assise (3),
le dossier (2) étant conçu de manière rabattable et étant relié à au moins un premier élément à cames et l'assise (3) étant conçue de manière rabattable et étant reliée à au moins un deuxième élément à cames, les deux éléments à cames (6, 7) étant disposées suivant la direction de la largeur d'assise (B) à une certaine distance l'un de l'autre et étant disposées de manière rotative autour d'un axe (5) commun s'étendant dans la direction de la largeur d'assise (B), afin que le dossier (2) et l'assise (3) soient rotatifs d'au moins 90°, le premier et le deuxième éléments à cames présentant, respectivement, au moins deux zones de blocage,
**caractérisé en ce que**, l'au moins un ressort à lames (40, 41) s'appuie respectivement à l'extérieur de chaque élément à cames, lequel interagissant avec l'élément à cames en ce que au moins la partie (40a, 41 a) du ressort à lames entre en prise dans les zones de blocage.

2. Siège de véhicule selon la revendication 1,
**caractérisé en ce que** les zones de blocage sont conçues comme des évidements permettant la mise en prise d'une partie (40a, 41 a) d'une zone au moins partiellement incurvée de respectivement au moins un ressort à lames (40, 41).

3. Siège de véhicule selon l'une quelconque des revendications 1 ou 2,
**caractérisé en ce que** les éléments à cames sont conçues comme des disques à cames (6, 7) qui présentent, au moins par sections, respectivement, un bord de disque à cames (6c, 7c), sur lequel sont disposés les évidements (6a, 6b, 7a, 7b).

4. Siège de véhicule selon la revendication 3,
**caractérisé en ce que** les zones de blocage (6a, 6b, 7a, 7b) s'étendent suivant une direction radiale de la surface du bord (6c, 7c) du disque à cames (6, 7) vers l'intérieur ainsi que sur toute la largeur du bord du disque à cames (6c, 7c) et sur une zone déterminée le long du bord du disque à cames (6c, 7c).

5. Siège de véhicule selon l'une quelconque des revendications 2 à 4,
**caractérisé en ce que** la première zone de blocage du premier élément à cames est essentiellement opposée à la première zone de blocage du deuxième élément à cames suivant la direction de la largeur d'assise (B) lorsqu'une surface d'assise (3a) de l'élément d'assise (3) s'étend essentiellement parallèlement et lorsqu'une surface d'appui (2a) du dossier (3) s'étend essentiellement perpendiculairement à une surface de plancher du véhicule.

6. Siège de véhicule selon l'une quelconque des revendications 2 à 4,
**caractérisé en ce que** la deuxième zone de blocage du deuxième élément à cames est essentiellement opposée à la première zone de blocage du premier élément à cames suivant la direction de la largeur d'assise (B) lorsqu'une surface d'assise (3a) de l'élément d'assise (3) ainsi qu'une surface d'appui (2a) du dossier (2) s'étendent, respectivement, essentiellement de manière perpendiculaire à une surface de plancher du véhicule.

7. Siège de véhicule selon l'une quelconque des revendications 2 à 4,
**caractérisé en ce que** la deuxième zone de blocage du premier élément à cames est essentiellement opposée à la première zone de blocage du deuxième élément à cames suivant la direction de la largeur d'assise lorsqu'une surface d'assise (3a) de l'élément d'assise (3) ainsi qu'une surface d'appui (2a) du dossier (2) s'étendent respectivement, essentiellement de manière parallèle à une surface de plancher du véhicule.

8. Siège de véhicule selon l'une quelconque des revendications précédentes,
**caractérisé en ce que** le dossier (2) est disposé, avec le côté opposé au côté disposé sur le premier élément à cames (6), avec un premier bras de support (8), de manière rotative autour de l'axe commun (5).

9. Siège de véhicule selon l'une quelconque des revendications précédentes,
**caractérisé en ce que** l'assise (3) est disposée, avec le côté opposé au côté disposé sur le deuxième disque à cames (7), avec un deuxième bras de support (9), de manière rotative autour de l'axe commun (5).

10. Siège de véhicule selon la revendication 1,
**caractérisé en ce que** les ressorts à lames (40, 41) sont disposés respectivement, avec une zone d'extrémité, au moins par sections rigide à la torsion, dans respectivement un dispositif de serrage (45) amovible pour le remplacement des ressorts à lames (40, 41).
